# EUROPEAN PATENT APPLICATION

(11) **EP 4 510 054 A1**
(43) Date of publication of application: **19.02.2025**
(21) Application number: 23788445.7
(22) Date of filing: 01.02.2023
(51) Int. Cl.: G06Q 10/06, G06Q 50/30, G01R 31/367, G01R 31/392, G01R 31/382, G07C 5/00, G07C 5/02

(54) **METHOD BY WHICH CB COMPANY RECEIVES BATTERY INFORMATION OF E-MOBILITY IN REAL TIME AND DETERMINES BATTERY VALUE, AND APPARATUS PERFORMING SAID METHOD**

(30) Priority: 13.04.2022 KR 20220045581
(71) Applicant: Aizen Global Co., Inc., Seoul 07242 (KR)
(72) Inventor: KANG, Jung Seok, Seoul 04386 (KR)
(74) Representative: AWA Sweden AB
(86) International application number: PCT/KR2023/001449
(87) International publication number: WO 2023/200090

(57) **Abstract**

The present invention relates to a method of receiving battery information in real time and determining a battery value for e-mobility of a credit bureau (CB), and an apparatus for performing the method. A method of receiving battery information in real time and determining a battery value for e-mobility of a credit bureau (CB), the method comprises receiving, by a battery valuation server, first battery valuation data from a vehicle and determining first battery value data, receiving, by the battery valuation server, second battery valuation data from an external server and determining second battery value data and determining, by the battery valuation server, battery value data based on the first battery value data and the second battery value data.

## Description

### Field of the Invention

The present invention relates to a method of receiving battery information in real time and determining a battery value for e-mobility of a credit bureau (CB), and an apparatus for performing the method. More particularly, the present invention relates to a method of receiving, by a credit evaluation server, battery information and evaluating a battery value for a battery-based financial service, and an apparatus for performing the method.

### Discussion of Related Art

Recently, with the rapid development of electric vehicle-related power electronics and battery technology, interest in the development and supply of electric vehicles that do not emit carbon dioxide is increasing worldwide.

However, there are still several obstacles to the expansion of the spread of electric vehicles. In particular, the energy density of a battery is not yet large enough, and thus it is not possible to satisfactorily increase the driving mileage of an electric vehicle. Therefore, many studies are being actively conducted to increase the charging capacity of a battery by increasing the energy density of the battery. Although batteries of electric vehicles are becoming more and more advanced through research, due to requirements for high safety and high performance of the batteries of the electric vehicles, when the chargeable capacity reaches a critical capacity (e.g., 80%) as compared to a new battery, the battery is regarded as a waste battery and is no longer used in the electric vehicle, and is subject to a disposal procedure.

Disposal of batteries can lead to environmental pollution caused by the chemical substances in the batteries. The disposal of batteries means that enormous resources are wasted nationally, and thus there is a need for sufficient discussion on the reuse of batteries. Further, the batteries discarded from the electric vehicles still have a value corresponding to a residual capacity of about 80%, and thus it is considered that when the batteries are applied to output stabilization of renewable energy, which is an application field that mainly operates at lower requirements than electric vehicles or a current rate (c-rate) of 1 or less, the use of late-night power, or the like, economic feasibility can be sufficiently secured.

Therefore, the value of the reuse of the batteries of the electric vehicles is increasing, and opportunities to generate new and diverse business models including a financial service based on a battery of an electric vehicle can be provided.

In order to reuse the batteries of the electric vehicles, it is important to determine the value of the batteries of the electric vehicles. The determination of the value of the battery of the electric vehicle may be performed by accurately measuring the capacity and performance of the battery through a battery diagnostic test. However, the battery diagnostic test of the electric vehicle only informs the degree of performance degradation at that moment and does not predict a trend for the performance degradation related to the expected lifetime, that is, the remaining useful lifetime, when reused. That is, this is because, even when the degree of performance degradation is equally calculated through the battery diagnostic test, when a usage environment or driving history until being discarded is different, the degradation tendency of the battery also varies during a secondary usage period. Therefore, in order to determine the value of the battery of the electric vehicle, it is necessary to determine not only the degree of performance degradation but also the history of use of the battery of the electric vehicle.

That is, a study on a method of accurately determining the value of a battery of an electric vehicle to provide a financial service based on the battery of the electric vehicle is required.

### SUMMARY OF THE INVENTION

An object of the present invention is to solve all of the above problems.

In addition, the present invention provides a method of accurately determining a value of an electric vehicle battery for providing an electric vehicle battery-based financial service.

Further, the present invention is to receive, by a credit bureau (CB), vehicle driving data from a vehicle and to provide information on an electric vehicle battery value in real time.

According to an aspect of the present invention, there is provided a method of receiving battery information in real time and determining a battery value for e-mobility of a credit bureau (CB), the method comprises receiving, by a battery valuation server, first battery valuation data from a vehicle and determining first battery value data, receiving, by the battery valuation server, second battery valuation data from an external server and determining second battery value data and determining, by the battery valuation server, battery value data based on the first battery value data and the second battery value data.

Meanwhile, wherein the first battery valuation data includes vehicle driving data individually generated for each vehicle, and the second battery valuation data is not individually generated for each vehicle and includes external factor data that determines a battery value regardless of vehicle driving.

Further, wherein the first battery value data includes: collecting, by the battery valuation server, data on an actual driving distance compared to an amount of charge of the vehicle; correcting, by a battery valuation server, the data on the actual driving distance compared to the amount of charge of the vehicle based on driving route information, speed change information, acceleration change information, and external environment information, and generating a battery valuation graph; and determining, by the battery valuation server, the first battery value data based on the battery valuation graph, and the battery valuation graph includes information on a possible driving distance from when the battery is fully charged to when the battery is fully discharged under a preset driving condition.

According to another aspect of the present invention, there is provided a battery valuation server for a credit bureau (CB) to receive battery information in real time for e-mobility and determine a battery value, wherein the battery valuation server is configured to: receive first battery valuation data from a vehicle and determine first battery value data, receive second battery valuation data from an external server and determine second battery value data, and determine the battery value data based on the first battery value data and the second battery value data.

Meanwhile, wherein the first battery valuation data includes vehicle driving data individually generated for each vehicle, and the second battery valuation data is not individually generated for each vehicle and includes external factor data that determines the battery value regardless of vehicle driving.

Further, wherein the battery valuation server is configured to collect the data on the actual driving distance compared to the amount of charge of the vehicle, and corrects the data on the actual driving distance compared to the amount of charge of the vehicle based on driving route information, speed change information, acceleration change information, and external environment information to generate a battery valuation graph, and to determine the first battery value data based on the battery valuation graph, and the battery valuation graph includes information on a possible driving distance from when the battery is fully charged to when the battery is fully discharged under a preset driving condition.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:
FIG. 1 is a conceptual diagram illustrating a real-time battery value evaluation system according to an embodiment of the present invention.
FIG. 2 is a conceptual diagram illustrating a method of evaluating, by a battery value evaluation server, a battery value according to an embodiment of the present invention.
FIG. 3 is a conceptual diagram illustrating a method of determining first battery value data according to an embodiment of the present invention.
FIGS. 4 and 5 are conceptual diagrams illustrating a method of determining first battery value data according to an embodiment of the present invention.
FIG. 6 is a conceptual diagram illustrating a method of determining a driving condition for a target correction section according to an embodiment of the present invention.

### DETAILED DESCRIPTION OF EXEMPLARY EMBODIMENTS

The detailed description of the present invention will be made with reference to the accompanying drawings showing examples of specific embodiments of the present invention. These embodiments will be described in detail such that the present invention can be performed by those skilled in the art. It should be understood that various embodiments of the present invention are different but are not necessarily mutually exclusive. For example, a specific shape, structure, and characteristic of an embodiment described herein may be implemented in another embodiment without departing from the scope and spirit of the present invention. In addition, it should be understood that a position or arrangement of each component in each disclosed embodiment may be changed without departing from the scope and spirit of the present invention. Accordingly, there is no intent to limit the present invention to the detailed description to be described below. The scope of the present invention is defined by the appended claims and encompasses all equivalents that fall within the scope of the appended claims. Like reference numerals refer to the same or like elements throughout the description of the figures.

Hereinafter, in order to enable those skilled in the art to practice the present invention, exemplary embodiments of the present invention will be described in detail with reference to the accompanying drawings.

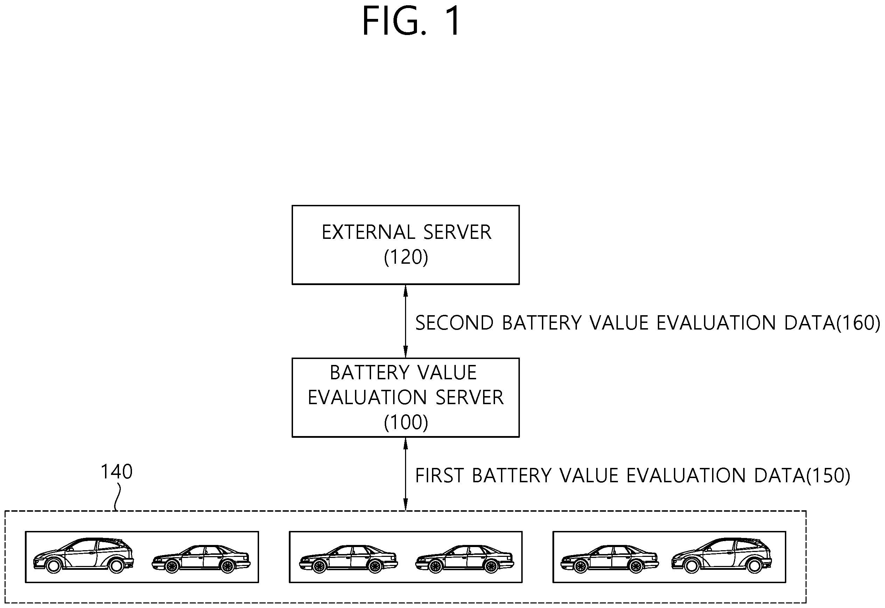

FIG. 1 is a conceptual diagram illustrating a real-time battery value evaluation system according to an embodiment of the present invention.

In FIG. 1, a real-time battery value evaluation system for performing value evaluation on a battery of each of a plurality of electric vehicles in real time is disclosed.

Referring to FIG. 1, the real-time battery value evaluation system may include a battery value evaluation server 100, vehicles 140, which are subjected to battery value evaluation, and an external server 120 that provides external information for battery value evaluation.

The battery value evaluation server 100 may be implemented to perform battery value evaluation. The battery value evaluation server 100 may receive first battery value evaluation data 150 for battery value evaluation from the vehicle 140. Further, the battery value evaluation server 100 may receive second battery value evaluation data 160 for battery value evaluation from the external server 120. The battery value evaluation server 100 may determine battery value data based on the first battery value evaluation data 150 and the second battery value evaluation data 160.

The first battery value evaluation data 150 is battery value evaluation data that is generated for each vehicle, and may include data that is individually generated according to vehicle driving, such as vehicle driving data.

The second battery value evaluation data 160 is battery value evaluation data that is not individually generated for each vehicle, and may be received from an external server. For example, the second battery value evaluation data 160 may include data on external factors that determine a battery value regardless of vehicle driving, such as a change in a battery transaction price, a change in a battery production price, and a change in raw material price.

The vehicle 140 is an electric vehicle (or electric mobility (e-mobility)) that moves based on a battery, and may generate the first battery value evaluation data 150. The first battery value evaluation data 150 may include vehicle driving data. The vehicle driving data is data that is sequentially generated over time, and may include various pieces of data that may affect the battery value during vehicle driving, such as vehicle speed data, vehicle driving mileage data, and vehicle charging data.

The vehicle may transmit the first battery value evaluation data 150 to the battery value evaluation server 100 in real time through communication. A plurality of pieces of first subordinate battery value evaluation data included in the first battery value evaluation data 150 may be grouped and transmitted periodically or aperiodically so that a current battery value may be accurately reflected as much as possible.

The external server 120 may generate the second battery value evaluation data 160 to transmit the generated second battery value evaluation data 160 to the battery value evaluation server 100. The second battery value evaluation data 160 may include a plurality of pieces of second subordinate battery value evaluation data. The plurality of pieces of second subordinate battery value evaluation data may include data that is not related to vehicle driving, such as a change in battery transaction price, a change in battery raw material price, a change in environment, and the like.

Hereinafter, a specific method of evaluating a battery value is disclosed.

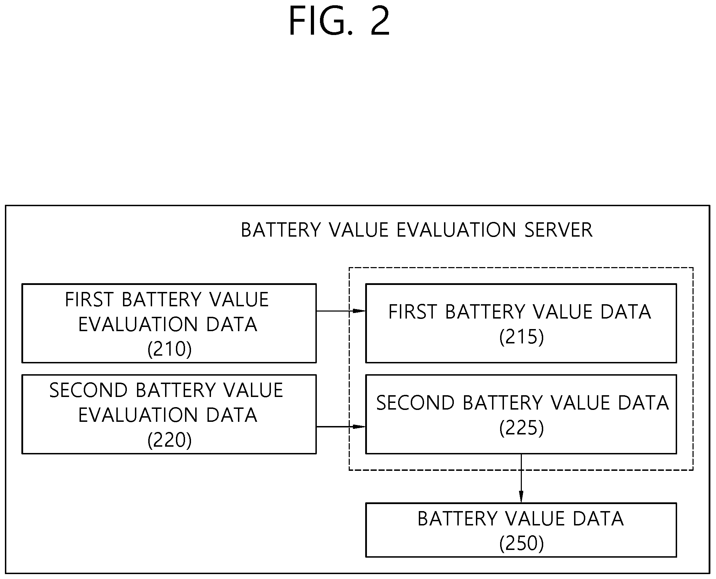

FIG. 2 is a conceptual diagram illustrating a method of evaluating, by a battery value evaluation server, a battery value according to an embodiment of the present invention.

In FIG. 2, a method of evaluating a battery value, in which the battery value is evaluated based on first battery value evaluation data and second battery value evaluation data, is disclosed.

Referring to FIG. 2, the battery value evaluation server may receive first battery value evaluation data 210 and second battery value evaluation data 220 and generate battery value data 250 in real time based on the first battery value evaluation data 210 and the second battery value evaluation data 220.

The battery value evaluation server may generate first battery value data 215 based on the first battery value evaluation data 210 and generate second battery value data 225 based on the second battery value evaluation data 220.

The first battery value data 215 may be determined for an individual vehicle and the second battery value data 225 may be determined for a vehicle group related to the second battery value evaluation data 220.

**In** order to finally determine the battery value data 250 by reflecting the first battery value data 215 and the second battery value data 225, the first battery value data 215 may be determined, and then an additional value correction procedure, in which the second battery value data 225 is considered, may be performed.

That is, the first battery value data 215 may be firstly determined with vehicle driving data of an individual vehicle, and then the additional value correction procedure, in which the second battery value data 225 based on external factors such as a current transaction price, raw material supply and demand, and the like is considered, may be performed.

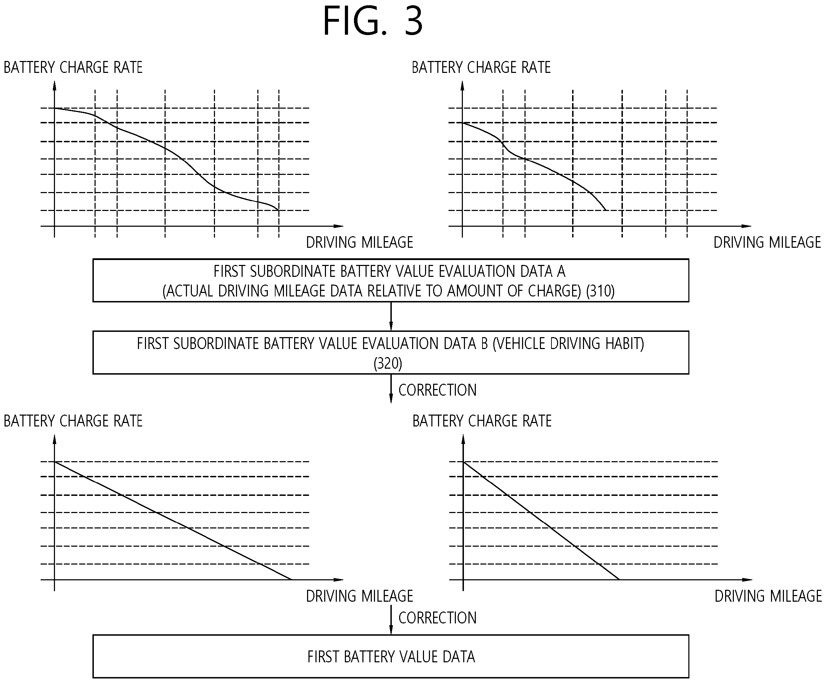

FIG. 3 is a conceptual diagram illustrating a method of determining first battery value data according to an embodiment of the present invention.

In FIG. 3, a method of determining first battery value data based on vehicle driving data of an individual vehicle is disclosed.

Referring to FIG. 3, the first battery value data may be determined based on the vehicle driving data collected from the vehicle in real time. The vehicle driving data may include a plurality of pieces of subordinate vehicle driving data as a plurality of pieces of first subordinate battery value evaluation data, and the plurality of pieces of first subordinate battery value evaluation data may be grouped according to the characteristics of the data and used to determine the first battery value data.

That is, the first battery value evaluation data used to determine the first battery value data may include the plurality of pieces of first subordinate battery value evaluation data (including first subordinate battery value evaluation data A and first subordinate battery value evaluation data B).

First, data on an actual driving mileage relative to an amount of charge of the vehicle may be collected as the first subordinate battery value evaluation data A.

For example, when an electric vehicle having a battery with a capacity of 80 kWh is present, data on how far the vehicle can travel (driving mileage) at a charging rate (e.g., 80%) may be collected. The actual driving mileage relative to the amount of charge of the vehicle may be collected as data that can most intuitively represent a degradation state of the battery. The charging rate may be changed for each charging, and the charging rate at which charging is performed may also be changed.

Data on a vehicle driving habit may be collected as the first subordinate battery value evaluation data B. The data on the vehicle driving habit may include data on a change in acceleration, a change in speed, a driving route, etc. of the vehicle that occur during driving. Specifically, in the vehicle which becomes a target of battery value evaluation, information that may affect battery discharge, such as charging state information, driving route information, speed change information, acceleration change information, external environment information, etc. of the vehicle, may be collected as the first subordinate battery value evaluation data B.

The driving mileage that the vehicle can travel may be changed even with a battery having the same performance depending on the vehicle driving habit. The first subordinate battery value evaluation data A may be corrected based on the first subordinate battery value evaluation data B to determine the first battery value data.

The first battery value data may be determined based on the first subordinate battery value evaluation data A and the first subordinate battery value evaluation data B which are collected for each individual vehicle. The first subordinate battery value evaluation data A may be determined for each individual vehicle, and the first subordinate battery value evaluation data B may be collected and determined for a vehicle driving group instead of the individual vehicle.

The first subordinate battery value evaluation data A, which is the actual driving mileage relative to the amount of charge, may be corrected based on the subordinate battery value evaluation data B to determine the first battery value data. A battery value determination graph that is determined by correcting the first subordinate battery value evaluation data A based on the subordinate battery value evaluation data B may include information on a driving mileage that the vehicle can travel after the battery is fully charged to 100% under preset driving conditions and until the battery is discharged to 0%. The battery value may be determined based on the battery value determination graph, and the first battery value data may be determined.

According to an embodiment of the present invention, the battery value determination graph may be partially changed every time the vehicle is driven, and accordingly, the first battery value data may be changed. Therefore, in the present invention, in order to reduce errors, current first battery value data may be determined by combining pieces of previously determined first battery value data. The battery value should be reduced with use, and when a battery value based on the previous first battery value data is greater than a battery value based on the current first battery value data, the corresponding first battery value data is not used to determine the battery value data and may be preferentially extracted as exception data. After being extracted as the exception data, when exception data of a critical number of times or more and first battery value data within a critical range is generated to be adjacent to the exception data, the first battery value data corresponding to the exception data, the exception data that is generated the critical number of times or more, and the first battery value data within the critical range may be reflected again as values for determining the battery value data and used to determine the battery value data. Conversely, after being extracted as the exception data, when exception data of a critical number of times or more and first battery value data within a critical range is not generated to be adjacent to the exception data, the first battery value data corresponding to the exception data may be discarded.

Hereinafter, a correction method for determining first battery value data and a method of determining current first battery value data based on previously determined first battery value data are specifically disclosed.

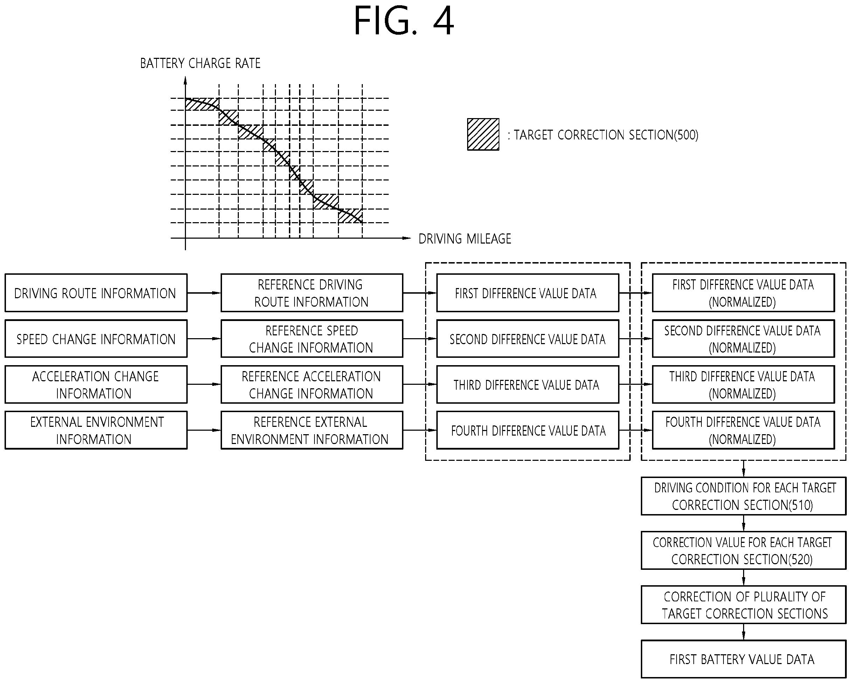

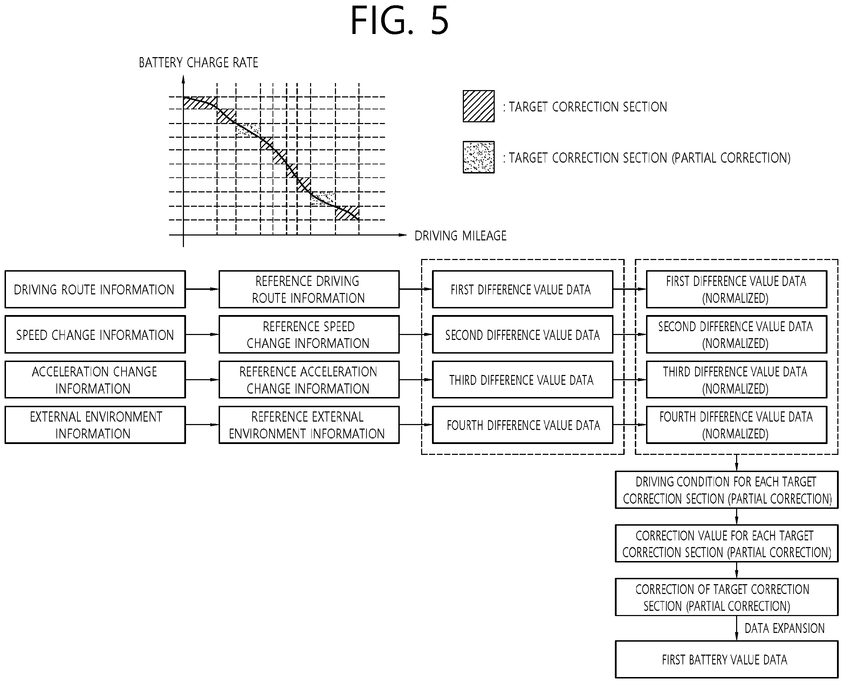

FIGS. 4 and 5 are conceptual diagrams illustrating a method of determining first battery value data according to an embodiment of the present invention.

In FIGS. 4 and 5, a method of determining first battery value data by correcting first subordinate battery value evaluation data A based on first subordinate battery value evaluation data B is disclosed.

According to an embodiment of the present invention, first battery value data may be determined through (1) full correction or (2) partial correction. In FIG. 4, (1) a full correction procedure is disclosed, and in FIG. 5, (2) a partial correction procedure is disclosed.

### (1) Full correction

The first subordinate battery value evaluation data A, which is the actual driving mileage data relative to the amount of charge, may be firstly divided according to a charge amount section and a threshold value of a slope of a change in driving mileage. The charge amount section is, for example, a section in which the amount of charge is changed by 10%, and may be divided based on a critical percentage, such as a 100% to 90% charge amount section, a 90% to 80% charge amount section, an 80% to 70% charge amount section, a 70% to 60% charge amount section, and the like, and a plurality of sub-charge amount sections may be generated.

**In** the present invention, the plurality of sub-charge amount sections may be determined in consideration of ON/OFF of the ignition rather than determining the plurality of sub-charge amount sections based on a reduction in the charge amount %. Alternatively, according to an embodiment of the present invention, the charge amount section may be adaptively set differently according to a driving pattern of the vehicle. As the number of times of long-mileage driving increases, the section of the charge amount % that is set as a sub-charge amount section is set to relatively increase, and for a battery with a large change in battery charge rate according to the characteristics of the battery, a threshold value of a slope of a change in driving mileage may be set to further increase. Through such a method, different target correction sections may be set for each vehicle, and more accurate first battery value data may be generated for each vehicle.

Hereinafter, for convenience of description, description will be made assuming a case of a plurality of fixed sub-charge amount sections and a fixed threshold value of a slope of a change in driving mileage.

The slope of the change in driving mileage may be a slope for a change in driving mileage according to a change in battery charge rate. The slope of the change in driving mileage in the case of driving 4 km when the battery charge rate is changed by 1% may be smaller than the slope of the change in driving mileage in the case of driving 2 km when the battery charge rate is changed by 1%.

The driving mileage section may be divided at a point where a critical slope of the change in driving mileage is changed to generate a plurality of sub-driving mileage sections. The critical slope of the change in driving mileage may be adaptively changed according to the setting of driving conditions to be described below. Different critical slopes of the change in driving mileage may be generated according to the driving conditions, and the critical slopes of the change in driving mileage for determining the plurality of sub-driving mileage sections may be determined in consideration of the driving conditions.

**In** the present invention, a plurality of target correction sections may be determined by each of the plurality of divided sub-charge amount sections and the plurality of divided sub-driving mileage sections.

After the plurality of target correction sections are set, correction may be performed on the first subordinate battery value evaluation data A corresponding to each of the plurality of target correction sections.

Each of driving route information, speed change information, acceleration change information, and external environment information may be considered to correct data on the actual driving mileage relative to the amount of charge within the plurality of target correction sections.

A difference value between each of the driving route information, the speed change information, the acceleration change information, and the external environment information and each of reference driving route information, reference speed change information, reference acceleration change information, and reference external environment information may be determined.

First difference value data on a difference between the driving route information and the reference driving route information, second difference value data on a difference between the speed change information and the reference speed change information, third difference value data on a difference between the acceleration change information and the reference acceleration change information, and fourth difference value data on a difference between the external environment information and the reference external environment information may be determined.

After the first difference value data, the second difference value data, the third difference value data, and the fourth difference value data are determined, the first difference value data, the second difference value data, the third difference value data, and the fourth difference value data may be normalized.

The normalized first difference value data, the normalized second difference value data, the normalized third difference value data, and the normalized fourth difference value data may be grouped and determined as specific driving conditions. **In** this way, the driving conditions for each of the plurality of target correction sections may be set, and correction values may be determined differently according to the driving conditions. A method of determining the correction values according to the driving conditions will be described below.

The correction may be performed for each of all the target correction sections in the above manner, and the first battery value data may be determined based on the driving mileage corrected for each of all the target correction sections.

### (2) Partial correction

The partial correction may be performed in consideration of only a target correction section (partial correction) in which each of the first difference value data (normalized), the second difference value data (normalized), the third difference value data (normalized), and the fourth difference value data (normalized) which are normalized because of being close to the reference driving route information, the reference speed change information, the reference acceleration change information, and the reference external environment information, among all the target correction sections, is within a critical difference value range.

For example, a case in which each of first difference value data (normalized), second difference value data (normalized), third difference value data (normalized), and fourth difference value data (normalized) based on driving route information, speed change information, acceleration change information, and external environment information in each of a target correction section #3 and a target correction section #8 are within a critical difference value range may be assumed.

**In** this case, the correction values according to the driving conditions may be determined only for each of the target correction section #3 and the target correction section #7, and the first battery value data may be determined based on the driving mileage corrected by extending the correction values.

According to an embodiment of the present invention, (1) full correction or (2) partial correction may be selectively used. For example, when the first battery value data of the vehicle is initially determined, the full correction may be performed n times, and thereafter, the first battery value data may be determined through the partial correction, whereas the full correction may be performed only periodically to determine the first battery value data.

Alternatively, when the driving condition of the vehicle based on the first subordinate battery value evaluation data B of the vehicle is continuously changed a critical number of times or more, the initial first battery value data may be determined again through the full correction.

When the driving habit or driving pattern of a driver of the vehicle is changed, the driving conditions may be changed, and a change in overall driving conditions may be determined based on a degree of change of grouped specific driving conditions of the first difference value data (normalized), the second difference value data (normalized), the third difference value data (normalized), and the fourth difference value data (normalized).

Hereinafter, the first battery value data may be determined through the partial correction, and the first battery value data may be determined only by periodically performing the full correction.

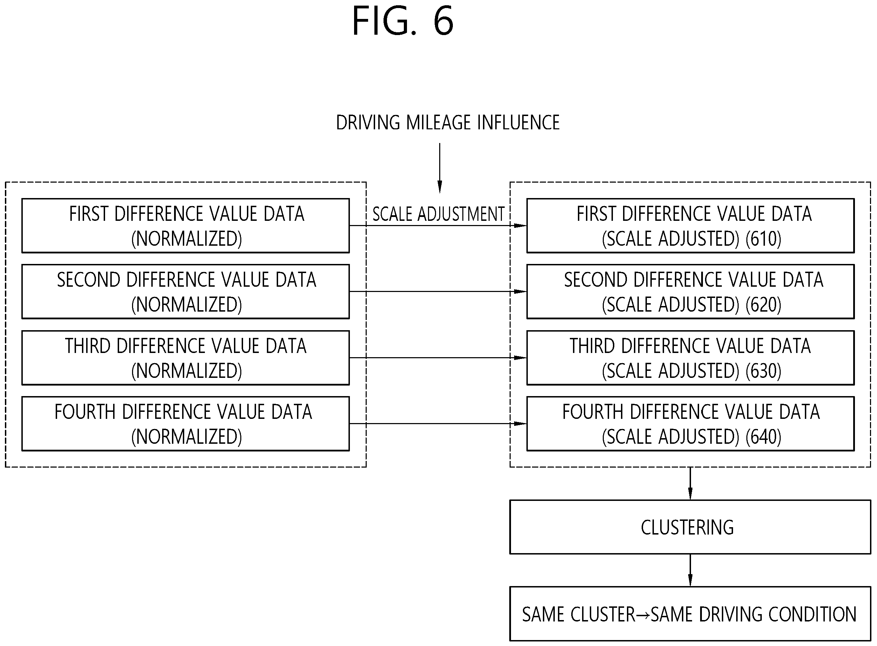

FIG. 6 is a conceptual diagram illustrating a method of determining a driving condition for a target correction section according to an embodiment of the present invention.

In FIG. 6, a method of determining a driving condition for a target correction section and determining a correction value according to the driving condition is disclosed.

Referring to FIG. 6, first difference value data (normalized), second difference value data (normalized), third difference value data (normalized), and fourth difference value data (normalized) may be grouped and determined as specific driving conditions.

In order to determine the driving condition corresponding to each of the first difference value data (normalized), the second difference value data (normalized), the third difference value data (normalized), and the fourth difference value data (normalized), an influence of each of the first difference value data (normalized), the second difference value data (normalized), the third difference value data (normalized), and the fourth difference value data (normalized) on a driving mileage may be determined.

Each of the first difference value data (normalized), the second difference value data (normalized), the third difference value data (normalized), and the fourth difference value data (normalized) may be positioned in a four-dimensional space. A scale of each of the first difference value data (normalized), the second difference value data (normalized), the third difference value data (normalized), and the fourth difference value data (normalized) in the four-dimensional space may be determined in consideration of the influence of each of the first difference value data (normalized), the second difference value data (normalized), the third difference value data (normalized), and the fourth difference value data (normalized) on the driving mileage. That is, the scale of the difference value data (normalized) may be adjusted in the four-dimensional space for clustering in consideration of a driving mileage influence on the driving mileage. The driving mileage influence may be determined based on an influence on the driving mileage when the remaining difference value data except for the specific difference value data is fixed.

For example, when the first difference value data (normalized) has a greater influence on the driving mileage than the second difference value data (normalized), the scale of the first difference value data (normalized) in the four-dimensional space may be set to be larger.

In this way, as the influence increases, the first difference value data may be adjusted so that the first difference value data may be positioned in the four-dimensional space based on the larger scale, and first difference value data (scale adjusted) 610, second difference value data (scale adjusted) 620, third difference value data (scale adjusted) 630, and fourth difference value data (scale adjusted) 640 may be determined based on a result obtained by adjusting the scale.

The first difference value data (scale adjusted) 610, the second difference value data (scale adjusted) 620, the third difference value data (scale adjusted) 630, and the fourth difference value data (scale adjusted) 640 may be clustered, and the same cluster may be determined as the same driving condition.

Driving conditions for each hour may be determined for each vehicle. For example, when the vehicle is driven after being charged, a driving condition group of a driver may be determined by collecting a period of time for each driving condition, for which the vehicle is driven, such as a first driving condition (x hours), a second driving condition (y hours), and a third driving condition (z hours). A degree of change of a specific driving condition grouped based on the driving condition group may be determined. When the vehicle is driven after being charged, the degree of change of the driving condition is determined in consideration of each driving condition included in the driving condition group and a time ratio during which each driving condition is maintained.

For example, when a set of {first driving condition (x hours), second driving condition (y hours), and third driving condition (z hours)} is generated and a set of {first driving condition (x' hours), second driving condition (y' hours), and fourth driving condition (z' hours)} is generated, the degree of change of the driving condition may be determined in consideration of a time ratio of the first driving condition and the second driving condition, which are the same driving condition, a cluster distance between the third driving condition and the fourth driving condition, which are different driving conditions, and a time ratio of the third driving condition and the fourth driving condition.

Further, according to an embodiment of the present invention, in order to rapidly determine a value, a superordinate cluster may be formed between different driving conditions according to the setting to enable rapid battery value determination.

For example, when a driving condition cluster #1 to a driving condition cluster #n are present, a plurality of adjacent driving condition clusters among the driving condition cluster #1 to the driving condition cluster #n may be grouped to form a more superordinate driving condition cluster. For example, the superordinate driving condition cluster #1 may be determined by grouping the driving condition cluster #1 and the driving condition cluster #3.

The superordinate driving condition cluster may be used for partial correction to enable rapid correction, and the driving condition cluster may be used for the full correction to enable more detailed battery value determination.

The embodiments of the present invention described above may be implemented in the form of program instructions that can be executed through various computer units and recorded on computer readable media. The computer readable media may include program instructions, data files, data structures, or combinations thereof. The program instructions recorded on the computer readable media may be specially designed and prepared for the embodiments of the present invention or may be available instructions well known to those skilled in the field of computer software. Examples of the computer readable media include magnetic media such as a hard disk, a floppy disk, and a magnetic tape, optical media such as a compact disc read only memory (CD-ROM) and a digital video disc (DVD), magneto-optical media such as a floptical disk, and a hardware device, such as a ROM, a RAM, or a flash memory, that is specially made to store and execute the program instructions. Examples of the program instruction include machine code generated by a compiler and high-level language code that can be executed in a computer using an interpreter and the like. The hardware device may be configured as at least one software module in order to perform operations of embodiments of the present invention and vice versa.

While the present invention has been described with reference to specific details such as detailed components, specific embodiments and drawings, these are only examples to facilitate overall understanding of the present invention and the present invention is not limited thereto. It will be understood by those skilled in the art that various modifications and alterations may be made.

Therefore, the spirit and scope of the present invention are defined not by the detailed description of the present invention but by the appended claims, and encompass all modifications and equivalents that fall within the scope of the appended claims.

## Claims

1. A method of receiving battery information in real time and determining a battery value for e-mobility of a credit bureau (CB), the method comprising:
receiving, by a battery valuation server, first battery valuation data from a vehicle and determining first battery value data;
receiving, by the battery valuation server, second battery valuation data from an external server and determining second battery value data; and
determining, by the battery valuation server, battery value data based on the first battery value data and the second battery value data.

2. The method of claim 1, wherein the first battery valuation data includes vehicle driving data individually generated for each vehicle, and
the second battery valuation data is not individually generated for each vehicle and includes external factor data that determines a battery value regardless of vehicle driving.

3. The method of claim 2, wherein the first battery value data includes:
collecting, by the battery valuation server, data on an actual driving distance compared to an amount of charge of the vehicle;
correcting, by a battery valuation server, the data on the actual driving distance compared to the amount of charge of the vehicle based on driving route information, speed change information, acceleration change information, and external environment information, and generating a battery valuation graph; and
determining, by the battery valuation server, the first battery value data based on the battery valuation graph, and
the battery valuation graph includes information on a possible driving distance from when the battery is fully charged to when the battery is fully discharged under a preset driving condition.

4. A battery valuation server for a credit bureau (CB) to receive battery information in real time for e-mobility and determine a battery value, wherein the battery valuation server is configured to:
receive first battery valuation data from a vehicle and determine first battery value data,
receive second battery valuation data from an external server and determine second battery value data, and
determine the battery value data based on the first battery value data and the second battery value data.

5. The battery valuation server of claim 4, wherein the first battery valuation data includes vehicle driving data individually generated for each vehicle, and
the second battery valuation data is not individually generated for each vehicle and includes external factor data that determines the battery value regardless of vehicle driving.

6. The battery valuation server of claim 5, wherein the battery valuation server is configured to collect the data on the actual driving distance compared to the amount of charge of the vehicle, and corrects the data on the actual driving distance compared to the amount of charge of the vehicle based on driving route information, speed change information, acceleration change information, and external environment information to generate a battery valuation graph, and to determine the first battery value data based on the battery valuation graph, and
the battery valuation graph includes information on a possible driving distance from when the battery is fully charged to when the battery is fully discharged under a preset driving condition.
